# NEUE EUROPÄISCHE PATENTSCHRIFT

(11) **EP 1 602 401 B2**
(45) Veröffentlichungstag und Bekanntmachung des Hinweises auf die Entscheidung über den Einspruch: **12.04.2017**
(45) Hinweis auf die Patenterteilung: 27.07.2011
(21) Anmeldenummer: 05104633.2
(22) Anmeldetag: 30.05.2005
(51) Int. Cl.: B01D 53/00, B01D 5/00

(54) **Verfahren und Vorrichtung zur aerosolarmen Partialkondensation**
Method and apparatus for partial condensation which is poor in aerosols
Procédé et dispositif de condensation partielle contenant peu d'aerosols

(30) Priorität: 01.06.2004 DE 102004026909
(43) Veröffentlichungstag der Anmeldung: 07.12.2005
(73) Patentinhaber: Messer Group GmbH, 65812 Bad Soden (DE)
(72) Erfinder: Herzog, Friedhelm, 47803, Krefeld (DE)

(56) Entgegenhaltungen:
- EP-A- 0 655 414
- EP-A1- 0 988 879
- EP-A2- 0 275 472
- EP-A2- 1 045 215
- EP-A2- 1 366 793
- DE-A1- 3 703 706
- DE-A1- 36 268 884
- DE-C1- 19 645 487
- FR-A- 629 465
- FR-A- 2 755 873
- GB-A- 916 620
- GB-A- 916 620
- US-A- 5 618 432
- US-A1- 2003 196 764
- US-A1- 2003 196 764
- US-B1- 6 273 940
- US-B1- 6 273 940
- "SAUBER BEI MINUSGRADEN" BETRIEBSTECHNIK, TECHNISCHER VERLAG RESCH KG. GRAEFELFING, DE, Bd. 36, Nr. 11/12, 1. November 1995 (1995-11-01), Seiten 38-40, XP000538909 ISSN: 0409-2791
- 'Ullmanns Encyklopädie der technischen Chemie', Bd. 4, 1972, VERLAG CHEMIE GMBH, WEINHEIM Seite 406

## Beschreibung

Die Erfindung betrifft ein Verfahren zur Reinigung von Gasen, bei dem ein mit einem Stoff beladener Gastrom zwecks Kondensation und/oder Ausfrieren in einem ersten Wärmetauscher zugeführt und mit einem Kühlmedium in thermischen Kontakt gebracht wird und anschließend das gereinigte Gas einem zweiten Wärmetauscher zugeführt und mit einem Kühlmedium in thermischen Kontakt gebracht wird.

Desweiteren betrifft die Erfindung eine Vorrichtung zur Reinigung von Gasen mit einem ersten und einem zweiten Wärmetauscher, die jeweils mit einer Zuführung und einer Ableitung für einen zu reinigenden Gasstrom sowie mit einer Zuführung und einer Ableitung für ein Kühlmedium und mit einer Ableitung für Kondensat ausgerüstet sind.

Verunreinigungen können aus Gasen durch Kondensation oder Ausfrieren abgeschieden werden. Unter "Gasen" sind hier allgemein Abluft-, Abgas oder Prozessgasströme gemeint, die aus Dampf, dampfförmigen Stoffen oder Gasen bestehen können. Insbesondere sind darunter auch relativ hoch mit Lösemitteln beladene Abluftströme gemeint, die beispielsweise bei Prozessen in der Chemie oder als Abgase aus Tanklagern entstehen können. Unter dem Begriff "Verunreinigungen" sind hier sowohl das Gas verunreinigende und zu entsorgende Schadstoffe als auch Lösemittel oder sonstige Stoffe zu verstehen, die als Wertstoffe einer weiteren Verwendung zugeführt werden können.

Hierzu werden nach dem Stand der Technik Wärmetauscher eingesetzt, bei denen der zu reinigende Gasstrom durch Kontakt mit Wärmetauscherflächen, die verschiedenartig ausgestaltet sein können und die mittels eines Kühlmediums gekühlt werden, in Kontakt gebracht wird. Wird dabei der Taupunkt der im Gasstrom vorhandenen Verunreinigungen unterschritten verflüssigt oder verfestigt sich zumindest ein Teil dieser Stoffe und kann vom Trägergasstrom abgetrennt werden.

So ist aus der EP 0 655 414 A1 ein Verfahren zum Entfernen elementaren Schwefels aus einem Gasstrom bekannt, bei dem der mit Schwefeldampf beladene Gasstrom in einem Wärmetauscher mit Luft in thermischen Kontakt gebracht wird, deren Temperatur unterhalb des Gefrierpunkts von Schwefel liegt. Der Schwefel kondensiert aus und wird aus dem Prozess abgeführt. Um zu verhindern, dass im Wärmetauscher zugleich mit dem Schwefel Wasser aus dem Gasstrom auskondensiert, wird die zur Kühlung eingesetzte Luft zunächst mit der vom Gasstrom erwärmten Luft in thermischen Kontakt gebracht und auf diese Weise vorgewärmt. Das aus der EP 0 655 414 A1 bekannte Verfahren ist jedoch speziell auf die Besonderheiten bei der Reinigung von mit Schwefeldämpfen beladenen Gasströmen zugeschnitten und nicht ohne weiteres auf andere Verfahren, insbesondere auf Verfahren zur Kryokondensation, bei der tiefkalt verflüssigte Gase als Kühlmittel zum Einsatz kommen, übertragbar.

Aus der FR 2 755 873 ist eine Einrichtung zur Rückgewinnung von insbesondere Kohlenwasserstoffen aus Gasströmen bekannt, bei denen ein mit einem abzuscheidenden Stoff beladener Gasstrom innerhalb eines gemeinsames Gehäuses nacheinander zwei übereinander angeordnete Wärmetauscher durchläuft, in denen der Gasstrom mit einem kryogenen Kältemittel im Gegenstrom in Kontakt gebracht wird. Der zweistufige Aufbau der Einrichtung soll insbesondere die Gefahrverringern, dass es aufgrund einer Anreicherung von Kohlenwasserstoffen im Kondensat zu einer Explosion kommt.

Aus der DE 19517273 C1 ist ein Verfahren sowie eine Vorrichtung zur Abgasreinigung mit Wärmetauschern bekannt, bei dem in einem ersten Wärmetauscher eine Reinigung des Prozessgases in der oben beschriebenen Weise erfolgt. Um eine Rekontamination des austretenden Gases mit Kondensat zu verhindern, kommt ein zweiter Wärmetauscher zum Einsatz, in dem der Gasstrom derart geführt wird, dass er in einer aufwärtsgerichteten Strömung mit den Wärmetauscherflächen in Kontakt kommt. Durch diese Anordnung sammelt sich das Kondensat im Eingangsbereich des zweiten Wärmetauschers an und kann abgeführt werden.

Der Anteil der aus dem Trägergas abgetrennten Stoffmenge gegenüber der insgesamt im Gas vorhandenen Stoffmenge ist in erster Linie vom Grad der Taupunktunterschreitung abhängig. Beim Abkühlprozess kommt es jedoch in der Regel zu einer Übersättigung des Gasstroms und zur Bildung von Aerosolen. Da die Aerosole im Wärmetauscher nur zu einem sehr kleinen Teil abgeschieden werden, ist die tatsächlich vom Trägergasstrom abtrennbare Stoffmenge kleiner als die aufgrund der temperaturabhängigen Dampfdrücke der Stoffe theoretisch erreichbare Abscheidung. Die Aerosole bilden so einen erheblichen Anteil der mit dem Trägergasstrom den Kondensator verlassenden Verunreinigungen.

Aufgabe der vorliegenden Erfindung ist daher, die Bildung und Ausbreitung von Aerosolen im Prozeßgas zu vermeiden.

Gelöst ist diese Aufgabe bei einem Verfahren der eingangs genannten Art dadurch, dass das Kühlmedium vor seiner Zuführung an den ersten Wärmetauscher beheizt wird und der gereinigte Gasstrom aus dem zweiten Wärmetauscher im ersten Wärmetauscher in thermischen Kontakt mit dem zu reinigenden Gasstrom gebracht wird und der gereinigte Gasstrom vor seiner Zuführung zum zweiten Wärmetauscher beheizt wird.

Der Erfindung liegt der Gedanke zu Grunde, dass die Bildung von Aerosolen umso geringer ausgeprägt ist, je geringer der Unterschied zwischen der Temperatur des Kühlmediums und der Temperatur des Gasstroms im Wärmetauscher ist. Die erfindungsgemäße Heizung des Kühlmediums vor seiner Zuführung in den ersten Wärmetauscher zielt daher darauf ab, eine nur geringe Temperaturdifferenz zwischen dem zu reinigenden Gasstrom am Ort seines Austritts aus dem Wärmetauscher und dem Kühlmedium herzustellen. Bei einem im Gegenstrom betriebenen Wärmetauscher wird diese geringe Temperaturdifferenz über den gesamten Wärmetauscher aufrecht erhalten. Somit wird in dem Strömungsabschnitt innerhalb des ersten Wärmetauschers, in dem eine Kondensation oder ein Ausfrieren des Stoffes oder der Stoffe, mit dem/denen der Gasstrom beladen ist, stattfindet, die Aerosolbildung wirkungsvoll unterdrückt. Im zweiten Wärmetauscher findet dagegen eine Abkühlung des Gasstroms auf eine möglichst tiefe Temperatur statt, um einen möglichst großen Anteil des Stoffes, der aus dem Gasstrom entfernt werden soll, auszukondensieren bzw. auszufrieren. Bei der Angabe "erster Wärmetauscher" und "zweiter Wärmetauscher" kann es sich entweder um räumlich getrennte, separate Vorrichtungen handeln oder aber um Teile desselben Wärmetauschers, die entlang des Strömungsweges des Gasstroms angeordnet sind. Der Begriff "Wärmetauscher" ist im Kontext der Erfindung sehr allgemein zu verstehen und umfasst insbesondere sowohl solche Einrichtungen, bei denen zwischen zwei Stoffen eine indirekte Wärmeübertragung, beispielsweise an Wärmetauscherflächen stattfindet, als auch solche, bei denen ein direkter körperlicher Kontakt zwischen den Stoffen hergestellt wird oder eine vollständige oder teilweise Durchmischung beider Stoffe erfolgt.

Gemäß der Erfindung wird der aus dem ersten Wärmetauscher austretende gereinigte Gasstrom beheizt, und zwar vorzugsweise auf eine Temperatur, die oberhalb des Taupunktes des Stoffes liegt, der aus dem Gasstrom entfernt werden soll. Hierdurch werden insbesondere zwei Effekte erzielt: Zum einen verdampfen die Aerosole, die sich im ersten Wärmetauscher dennoch gebildet haben. Zum anderen erhöht sich - für den Fall, dass das aus dem zweiten Wärmetauscher abströmende Kühlmedium zur Kühlung im ersten Wärmetauscher eingesetzt wird - die Temperatur des Kühlmediums am Ausgang des zweiten Wärmetauschers und verringert damit den Energieaufwand für die Heizung des Kühlmediums vor seinem Eintritt in den ersten Wärmetauscher. Es ist im Rahmen der Erfindung sogar denkbar, die gesamte Heizleistung für die Heizung des Kühlmediums im zweiten Wärmetauscher zur erbringen. Eine gesonderte Heizeinrichtung zwischen dem zweiten und dem ersten Wärmetauscher entfällt in diesem Sonderfall.

Eine weiter verbesserte Energiebilanz kann dadurch erzielt werden, dass der gereinigte Gasstrom aus dem zweiten Wärmetauscher im ersten Wärmetauscher in thermischen Kontakt mit dem zu reinigenden Gasstrom gebracht wird. Hierdurch erfolgt die Kühlung des Gasstroms im ersten Wärmetauscher zumindest teilweise durch den gereinigten Gasstrom selbst, und die Menge des Kühlmediums kann entsprechend vermindert werden.

Zur Optimierung der Temperatureffekte ist es bei der vorgenannten Ausführungsform vorteilhaft, dass der gereinigte Gasstrom nach seiner Ausleitung aus dem zweiten Wärmetauscher, jedoch vor seiner Zuführung zum ersten Wärmetauscher beheizt wird.

Besonders vorteilhaft ist es, wenn der der dem ersten Wärmetauscher zwecks Kühlung des zu reinigenden Gasstroms zuzuführende gereinigte Gasstrom aus dem zweiten Wärmetauscher in einem Mischer mit zumindest einem Teil des gereinigten Gasstroms, der im ersten Wärmetauscher als Kühlmittel eingesetzt und durch den Wärmekontakt mit dem zu reinigenden Gasstrom erwärmt wurde, vermischt und dadurch beheizt wird. Der zur Kühlung des zu reinigenden Gasstroms im ersten Wärmetauscher eingesetzte gereinigte Gasstrom wird dabei also zumindest teilweise im Kreislauf geführt. Eine durch Fremdenergie betriebene Heizung kann bei dieser Ausgestaltung entfallen oder lediglich als ergänzende Einrichtung eingesetzt werden.

Alternativ oder ergänzend kann anstelle des aus dem ersten Wärmetauscher austretenden angewärmten Reingases auch das im ersten Wärmetauscher angewärmte Kühlmedium oder ein anderes unter Druck stehendes Gas zur Beaufschlagung des Mischers verwendet werden.

Ergänzend oder alternativ zum Konzept eines zweiten Wärmetauschers mit getrennten Strömungswegen für den Gasstrom und das Kühlmedium sieht eine weiterführende Ausgestaltung der Erfindung vor, dass der gereinigte Gasstrom im zweiten Wärmetauscher zumindest teilweise mit dem Kühlmedium vermischt und zwecks Wärmetausch mit dem beladenen Gasstrom dem ersten Wärmetauscher zugeführt wird. Die Beheizung des Kühlmediums vor seiner Zuführung an den ersten Wärmetauscher erfolgt also durch den gereinigten Gasstrom selbst. Diese Ausgestaltung setzt freilich voraus, dass im ersten Wärmetauscher bereits eine für die jeweilige Anwendung hinreichende Reinigungswirkung des Gasstroms erzielt wird.

Die der Erfindung zugrunde liegende Aufgabe wird auch durch eine Vorrichtung der eingangs erwähnten Art gelöst, bei die Zuführung für das Kühlmedium zum ersten Wärmetauscher mit einer Heizeinrichtung versehen ist und der erste Wärmetauscher mit einer zweiten Kühlmittelzuführung ausgerüstet ist, die mit der Ableitung für den gereinigten Gasstrom aus dem zweiten Wärmetauscher in Strömungsverbindung steht. Die Heizeinrichtung führt dazu, dass im ersten Wärmetauscher eine nur geringe Temperaturdifferenz zwischen dem Prozessgas und dem Kühlmedium besteht, wodurch die Bildung von Aerosolen vermindert wird, wobei die Ableitung für den Gasstrom aus dem ersten Wärmetauscher mit einer Heizeinrichtung versehen ist.

Vorteilhafterweise ist der erste Wärmetauscher mit einer zweiten Kühlmittelzuführung ausgerüstet, die mit der Ableitung für den gereinigten Gasstrom aus dem zweiten Wärmetauscher in Strömungsverbindung steht.

Um die Effizienz der Reinigungswirkung zu erhöhen und die Energiekosten beim Betrieb der erfindungsgemäßen Vorrichtung zu senken, ist es besonders zweckmäßig, die Heizeinrichtung für das Kühlmedium und/oder für den Gasstrom mit einer Regeleinrichtung zu verbinden, mittels der die Temperatur des Gasstroms im ersten Wärmetauscher auf einen vorgegebenen Wert oder nach einem vorgegebenen Programm regelbar ist.

Eine gleichfalls vorteilhafte Variante der Erfindung sieht vor, dass die Heizeinrichtung einen Mischer umfasst, mittels dessen das dem ersten Wärmetauscher zuzuführende Kühlmedium mit in dem ersten Wärmetauscher erwärmtem Reingas oder im ersten Wärmetauscher erwärmten Kühlmedium oder einem anderen unter Druck stehenden Gas mischbar ist. Die Heizung erfolgt hier also nicht - oder nur ergänzend - durch eine mit Fremdenergie betriebene Heizeinrichtung, sondern durch die Zumischung von wenigstens einem Teil des im ersten Wärmetauscher erwärmten Kühlmediums.

Um die Temperatur des dem ersten Wärmetauscher zuzuführenden Kühlmediums gut kontrollieren zu können, ist es zweckmäßig, dass die Heizeinrichtung einen Wärmetauscher umfasst, mittels dessen das dem ersten Wärmetauscher zuzuführende Kühlmedium in thermischen Kontakt mit dem im zweiten Wärmetauscher erwärmten Kühlmedium treten kann. Das durch Heizung oder Mischung erwärmte Kühlmedium kann so wieder etwas abgekühlt und die insgesamt erreichte Temperaturerhöhung des Kühlmediums entsprechend eingestellt werden.

Eine weitere vorteilhafte Ausgestaltung der Erfindung sieht vor, dass die Zuführung für das Kühlmedium zum ersten Wärmetauscher mit einer Gaszuleitung strömungsverbunden ist. Die Kühlung im ersten Wärmetauscher erfolgt also durch ein entsprechend temperiertes Kühlgas, und zwar entweder ausschließlich oder unter Mischung des durch die Gaszuleitung zugeführten Kühlgases mit dem Kühlmedium und/oder dem gereinigten Gasstrom aus dem zweiten Wärmetauscher. Hierdurch ist eine zusätzliche Möglichkeit gegeben, die Temperatur-, Druck- und stofflichen Verhältnisse der jeweiligern Anwendung anzupassen. Entsprechend kann auch die Zuleitung für den zu reinigenden Gasstrom mit einer zusätzlichen Gaszuleitung strömungsverbunden sein.

Erfindungsgemäß kann im Übrigen auch eine Mehrzahl von Wärmetauschern zum Einsatz kommen, die jeweils mit Zuführungen und Ableitungen für Kühlmedium und für einen zu reinigenden Gasstrom ausgerüstet sind und die nacheinander, jedoch gegenläufig von dem Gasstrom und dem Kühlmedium durchlaufen werden, wobei jeweils die Zuführungen für das Kühlmittel und/oder den Gasstrom zu einem Wärmetauscher zumindest teilweise mit Heizeinrichtungen versehen sind. Unter "Mehrzahl von Wärmetauschern" kann im Rahmen der Erfindung sowohl eine Anzahl separater Vorrichtung zu verstehen sein, als auch Teile eines oder einiger Wärmetauscher, die entlang des Strömungsweges des Gasstroms angeordnet sind.

Anhand der Zeichnungen sollen nachfolgend Ausführungsbeispiele der Erfindung näher erläutert werden.
In schematischen Ansichten zeigen:
Fig. 1: das Strömungsbild einer erfindungsgemäßen Vorrichtung in einer ersten Ausführungsform,
Fig. 2: das Strömungsbild einer nicht erfindungsgemäßen Vorrichtung bei der das Kühlmedium durch Zumischung des gereinigten Prozessgases beheizt wird,
Fig. 3: das Strömungsbild einer erfindungsgemäßen Vorrichtung in einer zweiten Ausführungsform, bei der das dem ersten Wärmetauscher zugeführte Kühlmedium durch Zumischen von im ersten Wärmetauscher erwärmtem Kühlmittel beheizt wird und
Fig. 4: das Strömungsbild einer erfindungsgemäßen Vorrichtung in einer dritten Ausführungsform, bei der das dem ersten Wärmetauscher zugeführte Kühlmedium durch Zumischen von im ersten Wärmetauscher erwärmtem Kühlmedium und durch Wärmetausch mit dem im zweiten Wärmetauscher erwärmten Kühlmedium beheizt wird.

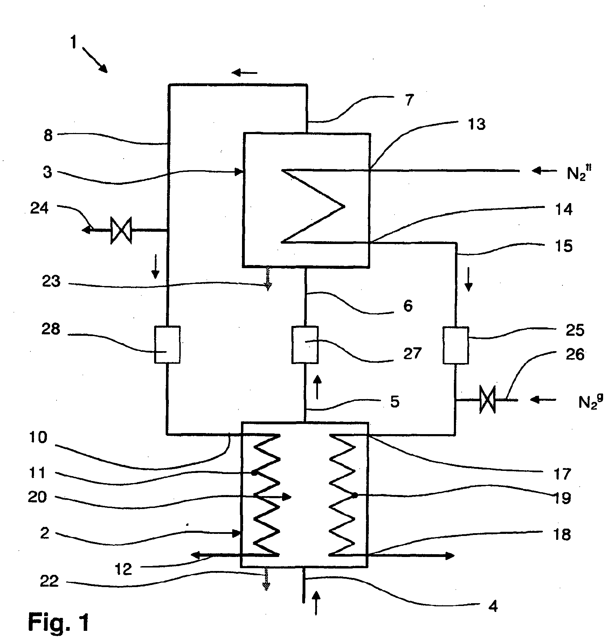

Die in Fig. 1 gezeigte Vorrichtung 1 umfasst einen ersten Wärmetauscher 2 und einen zweiten Wärmetauscher 3. Ein mit einem Stoff beladener, zu reinigender Prozessgasstrom tritt durch eine Prozessgaszuführung 4 in den ersten Wärmetauscher 2 ein und verlässt den ersten Wärmetauscher 2 am Prozessgasausgang 5, um über eine Prozessgasleitung 6 in den zweiten Wärmetauscher 3 einzutreten. Eine Prozessgasleitung 8 verbindet den Prozessgasausgang 7 des zweiten Wärmetauschers 3 mit einer Kühlmittelzuführung 10 des ersten Wärmetauschers 2. Schließlich verlässt das gereinigte Prozessgas - nach thermischem Kontakt mit dem noch ungereinigten Prozessgas - den ersten Wärmetauscher 2 am Kühlmittelausgang 12. Die Strömung des Prozessgases vom ersten Wärmetauscher 2 zum zweiten Wärmetauscher 3 und wieder zurück zum ersten Wärmetauscher 2 ist durch Pfeile angedeutet.

Die Kühlung im zweiten Wärmetauscher 3 erfolgt durch ein Kühlmedium - im Ausführungsbeispiel Flüssig-Stickstoff - der an einer Kühlmittelzuführung 13 dem zweiten Wärmetauscher 3 zugeführt wird. Das durch thermischen Kontakt mit dem Prozessgas an - hier nicht gezeigten - Wärmetauscherflächen erwärmte und/oder verdampfte Kühlmedium tritt am Kühlmittelausgang 14 aus dem zweiten Wärmetauscher 3 aus und wird über eine Kühlmittelleitung 15 dem ersten Wärmetauscher 2 zugeführt. Der erste Wärmetauscher 2 besitzt neben der Kühlmittelzuführung 10 für das gereinigte Prozessgas einen weiteren Kühlmitteleinlass 17, der mit der Kühlmittelleitung 15 strömungsverbunden ist. Schließlich verlässt das Kühlmedium den ersten Wärmetauscher 2 am Kühlmittelausgang 18.

Beim Eintritt des Prozessgases in den ersten Wärmetauscher 2 kühlt sich das Prozessgas aufgrund der thermischen Wechselwirkung sowohl mit dem gereinigten Prozessgas an der Wärmetauscherfläche 11 als auch durch thermischen Kontakt mit dem Kühlmedium an der Wärmetauscherfläche 19 ab. Im Bereich einer Taupunktzone 20 unterschreitet die Temperatur des Prozessgases den Taupunkt des Stoffes, der aus dem Prozessgas entfernt werden soll. Innerhalb des ersten Wärmetauschers 2 befindet sich somit ein Bereich, in dem eine Kondensation bzw. ein Ausfrieren des Stoffes stattfindet und der den gesamten Strömungsweg des Prozessgases zwischen der Taupunktzone 20 und dem Prozessgasausgang 5 umfasst. Das gewonnene Kondensat wird in hier nicht interessierender Weise an einem Kondensatabscheider 22 aus dem Wärmetauscher entfernt. Im zweiten Wärmetauscher 3 wird das Prozessgas durch thermischen Kontakt mit dem Kühlmedium weiter gereinigt, wobei hier anfallendes Kondensat am Kondensatabscheider 23 abgeschieden wird. Das auf diese Weise doppelt gereinigte Prozessgas wird entweder über eine Ableitung 24 entfernt oder in der oben beschriebenen Weise zur Kühlung des ungereinigten Prozessgases im ersten Wärmetauscher 2 eingesetzt.

An der Kühlmittelleitung 15 ist eine Heizeinrichtung 25 vorgesehen, mittels der das dem zweiten Wärmetauscher 3 entströmende Kühlmedium beheizt werden kann. Das zu der Wärmetauscherfläche 19 gelangende Kühlmedium besitzt also nur eine geringfügig niedrigere Temperatur als die Temperatur des Prozessgases im ersten Wärmetauscher 2. Beispielsweise beträgt die Temperaturdifferenz zwischen Prozessgas und Kühlmedium im Wärmetauscher 2 nahe dem Prozessgasausgang 5 etwa 5 - 30K. Da der erste Wärmetauscher 2 nach dem Gegenstromprinzip betrieben wird, liegt im Verlauf des gesamten Strömungsweges des Prozessgases, zumindest aber zwischen der Taupunktzone 20 und dem Prozessgasausgang 5 eine nur geringe Temperaturdifferenz zwischen dem Kühlmedium und dem zu reinigenden Prozessgas vor. Anstelle oder ergänzend zu der Heizung des aus dem zweiten Wärmetauscher 3 kommenden Kühlmediums mittels der Heizeinrichtung 25 kann auch entsprechend erwärmtes Gas, im Beispiel gasförmiger Stickstoff, bzw. Gas, das wärmer ist als das aus dem zweiten Wärmetauscher 3 austretende Kühlmedium, über die Zuleitung 26 herangeführt werden.

In der Prozessgasleitung 6 ist eine Heizeinrichtung 27 angeordnet, mittels der das im ersten Wärmetauscher 2 gereinigte Prozessgas im erwärmten Zustand dem zweiten Wärmetauscher 3 zugeführt werden kann. Vorzugsweise ist die Heizeinrichtung 27 so ausgelegt, dass das gereinigte Prozessgas auf eine Temperatur oberhalb des Taupunkts des zu entfernenden Stoffes gebracht wird.

Zwar ist am Ausgang des ersten Wärmetauschers der größte Teil, beispielsweise über 95% der zu kondensierenden Stoffe bereits aus dem Gasstrom entfernt, der verbleibende Teil besteht jedoch zu einem nicht geringen Anteil aus Aerosolen, die sich nur schwer durch Kondensation entfernen lassen. Mithilfe der Heizeinrichtung 27 werden die Aerosole verdampft. Im zweiten Wärmetauscher 3 kondensieren diese Bestandteile zu einem großen Teil in nicht - aerosoler Form und können in gewohnter Weise aus dem Wärmetauscher 3 entfernt werden.

Zur Optimierung der Vorrichtung 1 ist in der Prozessgasleitung 8 eine Heizeinrichtung 28 vorgesehen, mittels der das gereinigte Prozessgas vor seiner Zuführung in den ersten Wärmetauscher 2 temperiert werden kann. Ziel ist auch hier, das zur Kühlung eingesetzte gereinigte Prozessgas auf eine Temperatur aufzuheizen, die nur geringfügig unter der Temperatur des Prozessgases am Prozessgasausgang 5 des ersten Wärmetauschers 2 ist. Es liegt auch im Rahmen der Erfindung, ergänzend oder anstelle der Beheizung des aus dem ersten Wärmetauscher 2 austretenden Gasstroms ein entsprechend erwärmtes Gas über eine hier nicht gezeigte Zuleitung in die Prozessgasleitung 8 einströmen zu lassen.

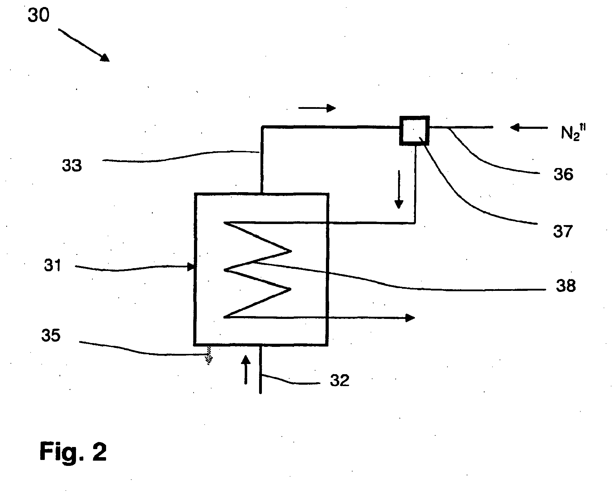

Im Unterschied zur Vorrichtung 1 umfasst die in Fig. 2 gezeigte nicht erfindungsgemäße Vorrichtung 30 nur einen Kondensator 31. Das zu reinigende Prozessgas tritt an einer Prozessgaszuführung 32 in den Kondensator 31 und verlässt diesen gereinigt am Prozessgasausgang 33. Das entstehende Kondensat wird an einem Kondensatabscheider 35 aus dem Kondensator 31 entfernt. Die Kühlung des Prozessgases im Kondensator 31 erfolgt mittels eines Kühlmediums, im Beispiel Flüssigstickstoff, der über eine Flüssiggaszuleitung 36 herangeführt wird. Zur Erwärmung des Kühlmediums ist ein Mischer 37 vorgesehen, in dem sich das Kühlmedium mit dem gereinigten Prozessgas mischt. Der Mischer 37 fungiert also zum einen als Wärmetauscher für das Prozessgas, zum anderen als Heizeinrichtung für das Kühlmedium. Das erwärmte Kühlmedium wird der Wärmetauscherfläche 38 im Kondensator 31 zugeführt. Aufgrund der relativ niedrigen Temperaturdifferenz zwischen Kühlmedium und Prozessgas findet im Kondensator 31 nur eine geringe Aerosolbildung statt.

### Beispiel 1:

Das Prozessgas tritt in den Wärmetauscher 31 der nicht erfindungsgemäßen Vorrichtung 30 mit einer Temperatur von plus 10°C ein. Durch thermischen Kontakt mit dem Kühlmedium kühlt sich das Prozessgas bis zum Prozessgasausgang 33 auf eine Temperatur von minus 130°C ab. Im Mischer vermischt sich dieses gereinigte Prozessgas mit dem dort zugeführten Flüssigstickstoff, der eine Temperatur von minus 196°C aufweist. Das entstehende Gemisch hat eine Temperatur von ca. minus 150°C, und mit dieser Temperatur wird das Kühlmedium dem Wärmetauscher 31 zugeführt. Durch thermischen Kontakt mit dem Prozessgas an der Wärmetauscherfläche 38 erwärmt sich das Kühlmedium bis zum Austritt aus dem Wärmetauscher 31 auf einen Wert von minus 20°C. Im Bereich des Prozessgasausgangs 33 besteht somit zwischen dem Prozessgas und dem Kühlmedium eine Temperaturdifferenz von lediglich 20K, im Bereich der Prozessgaszuführung besteht eine Temperaturdifferenz von lediglich 30K.

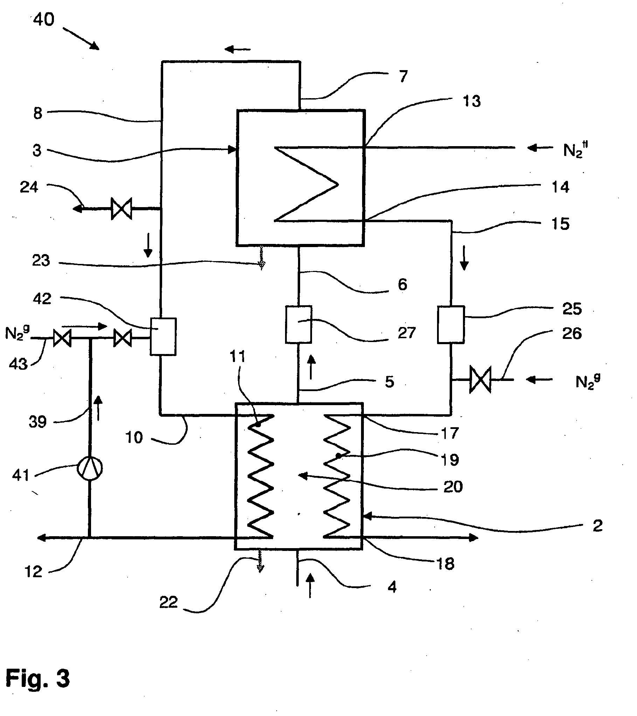

Das Ausführungsbeispiel nach Fig. 3 zeigt überwiegend die gleichen Merkmale wie das Ausführungsbeispiel nach Fig. 1, weshalb gleiche Bauteile mit gleichen Bezugszeichen versehen sind. Jedoch wird das gereinigte Prozessgas in der Vorrichtung 40 vor seiner Zuführung an den Wärmetauscher 2 nicht wie bei der Vorrichtung 1 mittels einer Heizeinrichtung 28 aufgeheizt, sondern die Temperierung des gereinigten Prozessgases erfolgt durch Zumischung zumindest eines Teiles des im Kühlmittelausgang 12 abströmenden Prozessgases, das durch den Wärmetausch mit dem ungereinigten Prozessgas im Wärmetauscher 2 erwärmt wurde. Dazu zweigt von der Kühlmittelausgangsleitung 12 eine Leitung 39 ab, in der eine Fördereinrichtung 41 integriert ist. Die Leitung 39 mündet an einem Mischer 42 in die Prozessgasleitung 8 ein. Bei diesem Ausführungsbeispiel wird also ein Teil des im Wärmetauscher 2 erwärmten gereinigten Prozessgases dem gereinigten Prozessgas in der Prozessgasleitung 8 zugemischt, um dieses zu beheizen. Die Temperatur des gereinigten Prozessgases in der Kühlmittelzuführung 10 kann durch Variation der Pumpenleistung oder durch Beimischung von frischem, gasförmigem Kühlmittel über eine Gaszuführung 43 beeinflusst werden. Eine separate Heizeinrichtung ist bei diesem Ausführungsbeispiel nicht mehr unbedingt erforderlich, kann jedoch zusätzlich eingebaut werden, um weitere Möglichkeiten zu haben, die Temperatur des Prozessgases zu beeinflussen. Anstelle oder ergänzend zur Beimischung von erwärmtem, gereinigtem Prozessgas aus der Kühlmittelausgangsleitung 12 kann im Übrigen auch erwärmtes Kühlmittel aus dem Kühlmittelausgang 18 ganz oder teilweise oder ein anderes unter Druck stehendes Gas dem gereinigten Prozessgas in der Prozessgasleitung 8 beigemischt werden, um diese zu beheizen.

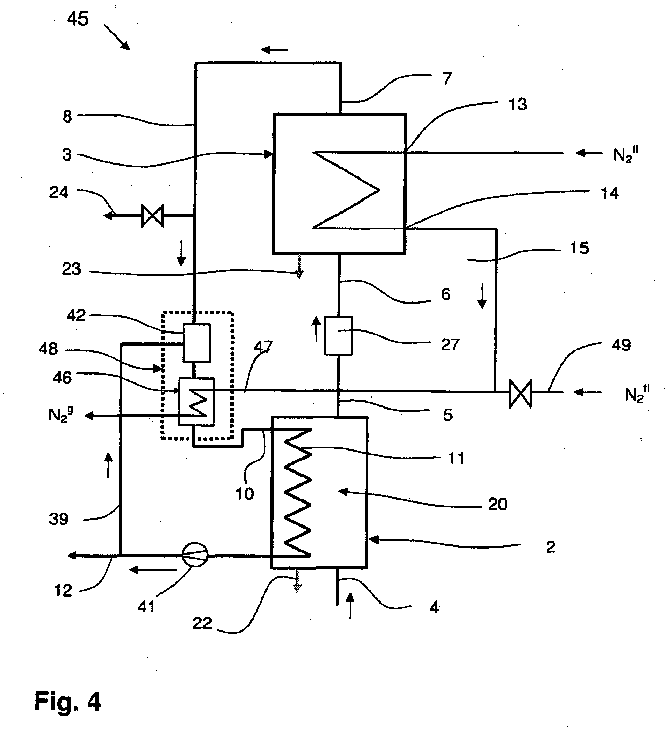

Eine Variante des zuvor beschriebenen Verfahrens ist in Fig. 4 gezeigt. Die dort gezeigte Vorrichtung 45 weist ähnlich der Vorrichtung 40 eine Heizeinrichtung 48 auf, die einen Mischer 42 umfasst, in dem erwärmtes gereinigtes Prozessgas aus dem Kühlmittelausgang 12, das über eine Leitung 39 unter Wirkung einer Fördereinrichtung 41 herangefördert wird, dem gereinigten Prozessgas in der Gasleitung 8 beigemischt wird. Um die Temperatur des dem Wärmetauscher 2 zuzuführenden gereinigten Prozessgas besser regulieren zu können, umfasst die Heizeinrichtung 48 zusätzlich einen Wärmetauscher 46, der in der Leitung 8, stromab zum Mischer 42, angeordnet ist. Im Wärmetauscher 46 tritt das gereinigte Prozessgas mit dem im zweiten Wärmetauscher 3 erwärmten Kühlmittel aus der Kühlmittelleitung 15 in Wärmetausch. Das in der Kühlmittelleitung 15 geführte Kühlmittel wird also nicht, wie bei den Vorrichtungen 1 und 30, dem ersten Wärmetauscher 2 zugeführt, sondern es sorgt für einen Wärmetausch mit dem durch die Prozessgasleitung 8 geführten gereinigten Prozessgases vor dessen Eintritt in den ersten Wärmetauscher 2. Die Kühlung des ungereinigten Prozessgases im Wärmetauscher 2 erfolgt bei der Vorrichtung 45 ausschließlich an den Wärmetauscherflächen 11 über den Wärmetausch zwischen dem gereinigten und dem ungereinigten Prozessgas. Zur Verbesserung der Möglichkeiten der Temperaturregulierung kann dem Kühlmittel über die Zuleitung 49 frisches kaltes Kühlmittel zugeführt werden, beispielsweise kaltes Stickstoffgas oder Flüssigstickstoff. Es ist jedoch wichtig zu gewährleisten, dass die Abkühlung des Prozessgases im Wärmetauscher 46 geringer ausfällt als die Erwärmung des Prozessgases im Mischer 42, da nur so die gewünschte geringe Temperaturdifferenz zwischen Kühlgas und ungereinigtem Prozessgas im Wärmetauscher 2 erreicht wird.

### Beispiel 2:

Das in den Wärmetauscher 2 der Vorrichtungen 1, 40 und 45 eintretende ungereinigte Prozessgas weist beim Eintritt eine Temperatur von 0°C, beim Austritt eine Temperatur von minus 120°C auf. Das dem Wärmetauscher 2 an der Kühlmittelzuführung 20 zugeführte Prozessgas hat - ebenso wie das in den Vorrichtungen 1 und 30 über den Kühlmitteleinlass 17 zugeführte Kühlmittel - bei seinem Eintritt in den Wärmetauscher 2 jeweils eine Temperatur von etwa minus 140°C und bei seinem Austritt aus dem Wärmetauscher 2 eine Temperatur von etwa minus 20°C. Die Temperaturdifferenz zwischen dem ungereinigten Prozessgas und den Kühlmitteln beträgt im Wärmetauscher 2 also stets nur etwa 20 K. Diese geringe Temperaturdifferenz wird durch Heizen des gereinigten Prozessgases, das am Prozessgasausgang 7 des Wärmetauschers 3 bei einer Temperatur von minus 150°C vorliegt und - in den Vorrichtungen 1 und 40 - durch entsprechendes Heizen des am Kühlmitteleinlass 17 zugeführten Kühlmittels, erreicht. Die Aufheizung des gereinigten Prozessgases erfolgt bei der Vorrichtung 1 mittels der beispielsweise elektrisch betriebenen Heizeinrichtung 28; bei der Vorrichtung 40 wird das gereinigte Prozessgases im Mischer 42 durch Beimischen des im Wärmetauscher 2 erwärmten, gereinigten Prozessgases aufgeheizt, das stromab zur Fördereinrichtung 41 eine Temperatur von etwa 0°C aufweist. Hierdurch und gegebenenfalls durch Zuführen von geeignet temperiertem Stickstoffgas über die Gaszuführung 43 kann eine gewünschte Temperaturerhöhung des Prozessgases, beispielsweise um 10 K, erzielt werden. Auch bei der Vorrichtung 45 wird die Temperaturerhöhung des Prozessgases in der Heizeinrichtung 48 gezielt auf den Wert von beispielsweise 10 K eingestellt, nämlich durch Beimischen eines Teils des im Wärmetauscher 2 erwärmten gereinigten Prozessgases im Mischer 42 und einem sich daran anschließenden Wärmetausch im Wärmetauscher 46.

### Bezugszeichenliste

- 1.: Vorrichtung
- 2.: Erster Wärmetauscher
- 3.: Zweiter Wärmetauscher
- 4.: Prozessgaszuführung (des ersten Wärmetauschers)
- 5.: Prozessgasausgang (des ersten Wärmetauschers)
- 6.: Prozessgasleitung
- 7.: Prozeßgasausgang (des zweiten Wärmetauschers)
- 8.: Prozeßgasleitung
- 9.: -
- 10.: Kühlmittelzuführung (für gereinigtes Prozessgas)
- 11.: Wärmetauscherfläche
- 12.: Kühlmittelausgang (für gereinigtes Prozessgas)
- 13.: Kühlmittelzuführung (des zweiten Wärmetauschers)
- 14.: Kühlmittelausgang (des zweiten Wärmetauschers)
- 15.: Kühlmittelleitung
- 16.: -
- 17.: Kühlmitteleinlass (für Kühlmedium)
- 18.: Kühlmittelausgang
- 19.: Wärmetauscherfläche
- 20.: Taupunktzone
- 21.: -
- 22.: Kondensatabscheider (des ersten Wärmetauschers)
- 23.: Kondensatabscheider (des zweiten Wärmetauschers)
- 24.: Ableitung
- 25.: Heizeinrichtung
- 26.: Zuleitung (für gasförmiges Kühlmedium)
- 27.: Heizeinrichtung
- 28.: Heizeinrichtung
- 29.: -
- 30.: Vorrichtung
- 31.: Kondensator
- 32.: Prozessgaszuführung
- 33.: Prozessgasausgang
- 34.: -
- 35.: Kondensatabscheider
- 36.: Flüssiggaszuleitung
- 37.: Mischer
- 38.: Wärmetauscherfläche
- 39.: Leitung
- 40.: Vorrichtung
- 41.: Fördereinrichtung
- 42.: Mischer
- 43.: Gaszuführung
- 44.: -
- 45.: Vorrichtung
- 46.: Wärmetauscher
- 47.: Leitung
- 48.: Heizeinrichtung
- 49.: Zuleitung

## Patentansprüche

1. Verfahren zur Reinigung von Gasen, bei dem ein mit einem Stoff beladener Gasstrom zwecks Kondensation und/oder Ausfrieren einem ersten Wärmetauscher (2) zugeführt und mit einem Kühlmedium in thermischen Kontakt gebracht wird und anschließend das gereinigte Gas einem zweiten Wärmetauscher (3) zugeführt und mit einem Kühlmedium in thermischen Kontakt gebracht wird, **dadurch gekennzeichnet, dass** das Kühlmedium vor seiner Zuführung an den ersten Wärmetauscher (2) beheizt wird und der gereinigte Gasstrom aus dem zweiten Wärmetauscher (3) im ersten Wärmetauscher (2) in thermischen Kontakt mit dem zu reinigenden Gasstrom gebracht wird
und der gereinigte Gasstrom vor seiner Zuführung zum zweiten Wärmetauscher (3) beheizt wird.

2. Verfahren nach Anspruch 1, **dadurch gekennzeichnet, dass** der gereinigte Gasstrom vorzugsweise auf eine Temperatur oberhalb des Taupunkts des Stoffes beheizt wird.

3. Verfahren nach Anspruch 2, **dadurch gekennzeichnet, dass** der gereinigte Gasstrom nach seiner Ausleitung aus dem zweiten Wärmetauscher (3), jedoch vor seiner Zuführung zum ersten Wärmetauscher (2) beheizt wird.

4. Verfahren nach Anspruch 3, **dadurch gekennzeichnet, dass** der dem ersten Wärmetauscher (2) zwecks Wärmetausch mit dem zu reinigenden Gasstrom zuzuführende gereinigte Gasstrom aus dem zweiten Wärmetauscher (3) in einem Mischer (42) mit zumindest einem Teil des im ersten Wärmetauscher (2) durch Wärmekontakt mit dem zu reinigenden Gasstrom erwärmten, gereinigten Gasstrom oder mit zumindest einem Teil des im ersten Wärmetauscher (2) durch Wärmekontakt mit dem zu reinigenden Gasstrom erwärmten Kühlmediums oder eines anderen unter Druck stehenden Gases vermischt und dadurch beheizt wird.

5. Verfahren nach einem der vorhergehenden Ansprüche, **dadurch gekennzeichnet, dass** der gereinigte Gasstrom aus dem ersten Wärmetauscher (31) in einem Mischer (37) zumindest teilweise mit dem Kühlmedium vermischt und zwecks Wärmetausch mit dem beladenen Gasstrom dem ersten Wärmetauscher (31) zugeführt wird.

6. Vorrichtung zur Reinigung von Gasen mit einem ersten Wärmetauscher (2,31) und einem zweiten Wärmetauscher (3, 37), die jeweils mit einer Zuführung (4,6,32) und einer Ableitung (5,8,33) für einen zu reinigenden Gasstrom sowie mit einer Zuführung (13,15) und einer Ableitung (14,18) für ein Kühlmedium und mit einer Ableitung (22,35) für Kondensat ausgerüstet sind,
**dadurch gekennzeichnet,**
**dass** die Zuführung (15) für das Kühlmedium zum ersten Wärmetauscher (2, 31) mit einer Heizeinrichtung (25, 27, 37) versehen ist und der erste Wärmetauscher (2) mit einer zweiten Kühlmittelzuführung (10) ausgerüstet ist, die mit der Ableitung (8) für den gereinigten Gasstrom aus dem zweiten Wärmetauscher (3) in Strömungsverbindung steht,
und **dass** die Ableitung (6) für den Gasstrom aus dem ersten Wärmetauscher (2, 31) mit einer Heizeinrichtung (25, 27, 37) versehen ist.

7. Vorrichtung nach Anspruch 6, **dadurch gekennzeichnet, dass** die Heizeinrichtung (25, 27) für das Kühlmedium und/oder für den Gasstrom mit einer Regeleinrichtung verbunden sind, mittels der die Temperatur des Gasstroms im ersten Wärmetauscher (2) auf einen vorgegebenen Wert oder nach einem vorgegebenen Programm regelbar ist.

8. Vorrichtung nach einem der Ansprüche 6 oder 7, **dadurch gekennzeichnet, dass** die Heizeinrichtung einen Mischer (42) umfasst, mittels dessen das dem ersten Wärmetauscher (2) zuzuführende Kühlmedium mit in dem ersten Wärmetauscher (2) erwärmtem gereinigten Gas oder im ersten Wärmetauscher (2) erwärmten Kühlmedium oder einem anderen unter Druck stehenden Gas mischbar ist.

9. Vorrichtung nach einem der Ansprüche 6 bis 8, **dadurch gekennzeichnet, dass** die Heizeinrichtung einen Wärmetauscher (46) umfasst, mittels dessen das dem ersten Wärmetauscher (2) zuzuführende Kühlmedium in thermischen Kontakt mit dem im zweiten Wärmetauscher (3) erwärmten Kühlmedium treten kann.

10. Vorrichtung nach einem der Ansprüche 6 bis 9, **dadurch gekennzeichnet, dass** die Zuführung (15) für das Kühlmedium zum ersten Wärmetauscher (2) und/oder die Zuführung (6) für den Gasstrom des zweiten Wärmetauschers mit einer Gaszuleitung (25) strömungsverbunden ist.

## Claims

1. Method for purifying gases, in which a gas stream laden with a material is supplied to a first heat exchanger (2) and brought into thermal contact with a coolant for the purpose of condensation and/or freezing out and subsequently the purified gas is supplied to a second heat exchanger (3) and brought into thermal contact with a coolant, **characterized in that** the coolant is heated before it is supplied to the first heat exchanger (2) and the purified gas stream from the second heat exchanger (3) is brought into thermal contact in the first heat exchanger (2) with the gas stream to be purified, and the purified gas stream is heated before it is supplied to the second heat exchanger (3).

2. Method according to Claim 1, **characterized in that** the purified gas stream is heated preferably to a temperature above the dew point of the material.

3. Method according to Claim 2, **characterized in that** the purified gas stream is heated after it has been discharged from the second heat exchanger (3) but before it is supplied to the first heat exchanger (2).

4. Method according to Claim 3, **characterized in that** the purified gas stream from the second heat exchanger (3), which gas stream is to be supplied to the first heat exchanger (2) for the purpose of heat exchange with the gas stream to be purified, is mixed in a mixer (42) with at least a part of the purified gas stream heated in the first heat exchanger (2) by thermal contact with the gas stream to be purified or with at least a part of the coolant heated in the first heat exchanger (2) by thermal contact with the gas stream to be purified or with a part of another, pressurized gas, and is heated thereby.

5. Method according to one of the preceding claims, **characterized in that** the purified gas stream from the first heat exchanger (31) is mixed at least partially with the coolant in a mixer (37) and is supplied to the first heat exchanger (31) for the purpose of heat exchange with the laden gas stream.

6. Apparatus for purifying gases, having a first heat exchanger (2, 31) and a second heat exchanger (3, 37), which are in each case equipped with a supply line (4, 6, 32) and a discharge line (5, 8, 33) for a gas stream to be purified and also with a supply line (13, 15) and a discharge line (14, 18) for a coolant and with a discharge line (22, 35) for condensate,
**characterized in that**
the supply line (15) for the coolant to the first heat exchanger (2, 31) is provided with a heating device (25, 27, 37) and the first heat exchanger (2) is equipped with a second coolant supply line (10) which is in flow connection with the discharge line (8) for the purified gas stream from the second heat exchanger (3), and **in that** the discharge line (5) for the gas stream from the first heat exchanger (2, 31) is provided with a heating device (25, 27, 37).

7. Apparatus according to Claim 6, **characterized in that** the heating device (25, 27) for the coolant and/or for the gas stream is connected to a regulating device, by means of which the temperature of the gas stream in the first heat exchanger (2) can be regulated to a predefined value or in accordance with a predefined program.

8. Apparatus according to either of Claims 6 and 7, **characterized in that** the heating device comprises a mixer (42), by means of which the coolant to be supplied to the first heat exchanger (2) can be mixed with purified gas heated in the first heat exchanger (2) or with coolant heated in the first heat exchanger (2) or with another, pressurized gas.

9. Apparatus according to one of Claims 6 to 8, **characterized in that** the heating device comprises a heat exchanger (46), by means of which the coolant to be supplied to the first heat exchanger (2) can enter into thermal contact with the coolant heated in the second heat exchanger (3).

10. Apparatus according to one of Claims 6 to 9, **characterized in that** the supply line (15) for the coolant to the first heat exchanger (2) and/or the supply line (6) for the gas stream of the second heat exchanger is in flow connection with a gas supply line (26).

## Revendications

1. Procédé pour l'épuration de gaz, dans lequel on envoie un courant de gaz chargé de poussière à un premier échangeur de chaleur (2) aux fins de condensation et/ou de séparation par congélation et on le met en contact thermique avec un fluide de refroidissement, et ensuite on envoie le gaz épuré à un deuxième échangeur de chaleur (3) et on le met en contact thermique avec un fluide de refroidissement, **caractérisé en ce que** l'on chauffe le fluide de refroidissement avant son envoi au premier échangeur de chaleur (2) et on met en contact thermique, dans le premier échangeur de chaleur (2), le courant de gaz épuré provenant du deuxième échangeur de chaleur (3) avec le courant de gaz à épurer, et l'on chauffe le courant de gaz épuré avant son envoi au deuxième échangeur de chaleur (3).

2. Procédé selon la revendication 1, **caractérisé en ce que** l'on chauffe de courant de gaz épuré de préférence à une température supérieure au point de rosée de la poussière.

3. Procédé selon la revendication 2, **caractérisé en ce que** l'on chauffe le courant de gaz épuré après sa sortie hors du deuxième échangeur de chaleur (3), mais avant son envoi au premier échangeur de chaleur (2).

4. Procédé selon la revendication 3, **caractérisé en ce que** l'on mélange le courant de gaz épuré provenant du deuxième échangeur de chaleur (3) à envoyer au premier échangeur de chaleur (2) en vue d'un échange de chaleur avec le courant de gaz à épurer, dans un mélangeur (42), avec au moins une partie du courant de gaz épuré, chauffé dans le premier échangeur de chaleur (2) par contact thermique avec le courant de gaz à épurer, ou avec au moins une partie du fluide de refroidissement, ou d'un autre gaz se trouvant sous pression, chauffé dans le premier échangeur de chaleur (2) par contact thermique avec le courant de gaz à épurer, et on le chauffe de cette manière.

5. Procédé selon l'une quelconque des revendications précédentes, **caractérisé en ce que** l'on mélange le courant de gaz épuré provenant du premier échangeur de chaleur (31) au moins en partie avec le fluide de refroidissement dans un mélangeur (37) et on l'envoie au premier échangeur de chaleur (31) en vue d'un échange de chaleur avec le courant de gaz chargé de poussière.

6. Dispositif pour l'épuration de gaz avec un premier échangeur de chaleur (2, 31) et un deuxième échangeur de chaleur (3, 37), qui sont respectivement équipés d'une alimentation (4, 6, 32) et d'une évacuation (5, 8, 33) pour un courant de gaz à épurer, ainsi qu'avec une alimentation (13 15) et une évacuation (14, 18) pour un fluide de refroidissement, et avec une évacuation (22, 35) pour le condensat, **caractérisé en ce que** l'alimentation (15) destinée au fluide de refroidissement au premier échangeur de chaleur (2, 31) est dotée d'un dispositif de chauffage (25, 27, 37) et le premier échangeur de chaleur (2) est doté d'une deuxième alimentation d'agent de refroidissement (10), qui est en relation d'écoulement avec l'évacuation (8) destinée au courant de gaz épuré provenant du deuxième échangeur de chaleur (3), et **en ce que** l'évacuation (5) destinée au courant de gaz provenant du premier échangeur de chaleur (2, 31) est munie d'un dispositif de chauffage (25, 27, 37).

7. Dispositif selon la revendication 6, **caractérisé en ce que** le dispositif de chauffage (25, 27) pour le fluide de refroidissement et/ou pour le courant de gaz est relié à un dispositif de régulation, au moyen duquel la température du courant de gaz dans le premier échangeur de chaleur (2) peut être régulée à une valeur prédéterminée ou suivant un programme prédéterminé.

8. Dispositif selon l'une quelconque des revendications 6 ou 7, **caractérisé en ce que** le dispositif de chauffage comprend un mélangeur (42), au moyen duquel le fluide de refroidissement à envoyer au premier échangeur de chaleur (2) peut être mélangé avec un gaz épuré chauffé dans le premier échangeur de chaleur (2) ou du fluide de refroidissement ou un autre gaz se trouvant sous pression chauffé dans le premier échangeur de chaleur (2).

9. Dispositif selon l'une quelconque des revendications 6 à 8, **caractérisé en ce que** le dispositif de chauffage comprend un échangeur de chaleur (46), au moyen duquel le fluide de refroidissement à envoyer au premier échangeur de chaleur (2) peut être mis en contact thermique avec le fluide de refroidissement chauffé dans le deuxième échangeur de chaleur (3).

10. Dispositif selon l'une quelconque des revendications 6 à 9, **caractérisé en ce que** l'alimentation (15) destinée au fluide de refroidissement au premier échangeur de chaleur (2) et/ou l'alimentation (6) destinée au courant de gaz du deuxième échangeur de chaleur sont en relation d'écoulement avec une conduite d'arrivée de gaz (26).
